# FASCICULE DE BREVET EUROPEEN

(11) **EP 2 161 605 B1**
(45) Date de publication et mention de la délivrance du brevet: **21.08.2013**
(21) Numéro de dépôt: 09169447.1
(22) Date de dépôt: 04.09.2009
(51) Int. Cl.: G02B 23/16, G02B 7/192

(54) **Système d'observation avec ensemble de garde**
Beobachtungssystem mit Schutzeinheit
Observation system with shielding device

(30) Priorité: 05.09.2008 FR 0855973
(43) Date de publication de la demande: 10.03.2010
(73) Titulaire: ASTRIUM SAS, 92150 Suresnes (FR)
(72) Inventeur: Nonnet, Jean-Christophe, 31320, VIEILLE TOULOUSE (FR); Safa, Frédéric, 31400, TOULOUSE (FR)
(74) Mandataire: Cabinet Plasseraud

(56) Documents cités:
- WO-A-03/083509
- JP-A- 9 133 872
- US-A- 4 542 963
- US-A- 6 114 671
- US-A1- 2007 097 500
- WISSINGER A B: "THE LARGE SPACE TELESCOPE" OPTICAL ENGINEERING, SOC. OF PHOTO-OPTICAL INSTRUMENTATION ENGINEERS, BELLINGHAM, vol. 14, no. 2, 1 mars 1975 (1975-03-01), pages 107-111, XP000610139 ISSN: 0091-3286
- BOCK J J ET AL: "COOLED BAFFLE SYSTEM FOR SPACEBORNE INFRARED TELESCOPES" APPLIED OPTICS, OSA, OPTICAL SOCIETY OF AMERICA, WASHINGTON, DC, vol. 34, no. 13, 1 mai 1995 (1995-05-01), pages 2268-2277, XP000504839 ISSN: 0003-6935
- K. O. MASON ET AL.: "The XMM Newton optical/UV monitor telescope", ASTRONOMY & ASTROPHYSICS, vol. 365, no. 1, 1 January 2001 (2001-01-01), pages L36-L44, DOI: 10.1051/0004-6361:20000044
- MASSIMO ROBBERTO: 'Performance of HST as an infrared telescope' PROCEEDINGS OF SPIE vol. 4013, 01 Janvier 2000, pages 386 - 393, XP055013156 DOI: 10.1117/12.394037 ISSN: 0277-786X

## Description

La présente invention concerne un système d'observation qui est équipé d'un ensemble de garde («shield assembly» en anglais). En particulier, il peut s'agir d'un système d'observation qui comprend un télescope d'observation, notamment un télescope d'observation en lumière visible.

L'invention s'applique tout particulièrement à l'observation d'une planète, par exemple de la Terre, à partir d'un satellite qui est mis en orbite autour de cette planète. Elle s'applique plus particulièrement à une telle observation qui est réalisée avec une résolution élevée.

Il est connu de disposer une garde («shield» en anglais) autour de l'entrée optique d'un télescope d'observation, notamment pour réduire la quantité de lumière parasite qui entre dans le télescope, et augmenter ainsi le contraste des images d'observation qui sont obtenues. Une telle garde est généralement constituée d'une structure globalement tubulaire, qui est ouverte à ses deux extrémités et qui est disposée de façon coaxiale avec le premier miroir situé à l'entrée du télescope. Ce premier miroir est couramment désigné par miroir primaire. La structure tubulaire entoure le rayonnement incident qui arrive sur le miroir primaire du télescope, et réduit ainsi l'ouverture angulaire du champ d'entrée de la lumière parasite. Pour réduire aussi la quantité de lumière parasite qui pourrait être réfléchie sur la face interne de la structure tubulaire, cette face interne est souvent recouverte d'un revêtement absorbant à faible pouvoir de réflexion optique, par exemple en peinture noire.

Il est aussi connu d'améliorer encore plus l'efficacité d'une telle garde en agençant des déflecteurs («baffles») périphériques sur la face interne de la structure tubulaire. De tels déflecteurs réfléchissent vers le demi-espace qui est situé devant le télescope des rayons qui entrent dans la structure tubulaire mais ne proviennent pas du champ d'observation et/ou ne participent pas à l'image qui est formée. Plusieurs formes ont été proposées pour ces déflecteurs, afin d'améliorer leur efficacité. Ils peuvent notamment être constitués d'ailettes («blades») à symétrie de révolution selon l'axe optique du télescope, et qui sont tournées obliquement à la fois en direction de l'axe longitudinal de la structure tubulaire et en direction de l'extrémité de la structure tubulaire qui est opposée au miroir primaire.

Le brevet US 4,542,963 décrit un tel ensemble de garde qui est conçu pour un télescope d'observation dans le domaine spectral infrarouge. Il indique en outre que l'ensemble de garde est conçu pour produire lui-même, par émission thermique, peu de rayonnement infrarouge dans le domaine spectral qui est utilisé pour l'observation. De cette façon, l'ensemble de garde produit très peu de rayonnement infrarouge parasite, c'est-à-dire qui est susceptible d'entrer dans le télescope et de réduire le contraste des images d'observation. Pour cela, la structure tubulaire qui est pourvue de déflecteurs est en plus refroidie par des éléments refroidissants dédiés.

US 6,114,671 décrit un système d'observation selon la préambule de la revendication 1.

Or les inventeurs de la présente invention ont constaté que la qualité des images qui sont obtenues en utilisant un télescope d'observation est dégradée par des déformations du miroir primaire du télescope. Ces déformations empêchent notamment de distinguer dans les images saisies des détails qui sont très petits. Les inventeurs ont aussi constaté que de telles déformations qui sont particulièrement gênantes proviennent d'écarts de température qui sont présents au sein du miroir primaire, entre des points de ce miroir qui sont décalés parallèlement à l'axe optique du télescope, et lorsque ces écarts varient avec le temps. En effet, un système de chauffage est souvent utilisé pour contrôler la température du miroir primaire. Ce système est situé contre la face postérieure du miroir, pour ne pas occulter sa face antérieure réfléchissante. Il produit donc dans le miroir primaire un flux de chaleur qui provient de l'arrière du miroir, alors que la face antérieure qui est tournée vers le champ d'observation ne reçoit qu'une faible quantité de rayonnement thermique. La face antérieure du miroir primaire est donc plus froide que sa face postérieure, et les gradients thermiques qui en résultent au sein du miroir primaire génèrent des déformations de celui-ci. Ces déformations, lorsqu'elles sont stables, sont prises en compte lors de la conception du télescope pour en minimiser les effets. Dès lors, toute variation de ces gradients thermiques présents dans le miroir primaire provoque une variation de la déformation du miroir primaire, et donc une diminution de la qualité optique du télescope.

En particulier, des variations de gradient de température de l'ordre de quelques milli-degrés qui sont présents dans le miroir primaire parallèlement à l'axe optique du télescope dégradent la qualité optique du télescope.

En outre, la quantité de rayonnement thermique qui est reçue sur la face antérieure du miroir primaire, en provenance du champ d'observation, est susceptible de varier considérablement. En effet, lorsque le télescope est utilisé pour observer une planète à partir d'un satellite, la quantité de rayonnement thermique provenant de cette planète est variable. Ainsi, dans le cas de la Terre, ce rayonnement thermique, qui est appelé albedo, varie selon que le champ d'observation comprend une zone nuageuse, une portion de la Terre qui est recouverte par de la forêt ou recouverte par de la banquise, une portion de la Terre qui est éclairée ou non par le soleil, etc. Cette variation dépend donc de la zone observée et de la position du satellite le long de son orbite.

La face antérieure du miroir primaire peut aussi être tournée momentanément vers l'espace interstellaire, lors de rotations du satellite ou pour orienter ses panneaux solaires vers le soleil. Dans ce cas, le rayonnement thermique que reçoit la face antérieure du miroir primaire devient extrêmement faible, pendant des durées plus ou moins longues. Des variations de température apparaissent alors au sein du miroir primaire, avec les déformations correspondantes, et persistent transitoirement lorsque le télescope est pointé de nouveau vers la planète observée ou la Terre. La période effective d'observation, pendant laquelle des images peuvent être obtenues avec la qualité optique désirée, est alors réduite par ces durées de rémanence des variations thermiques qui sont présentes au sein du miroir primaire.

Par conséquent, un premier but de l'invention consiste à réduire des déformations et des variations de déformation d'un composant optique d'entrée d'un système d'observation, qui peuvent dégrader la qualité optique des images obtenues. Au sens de la présente invention, on entend par composant optique d'entrée le premier composant optique d'un ensemble de formation d'image, en suivant le rayonnement qui pénètre dans cet ensemble en provenance du champ d'observation, et qui forme l'image.

Un deuxième but de l'invention consiste à réduire des variations de température, des gradients de température et des variations de gradient de température qui peuvent apparaître au sein d'un composant optique d'entrée d'un système d'observation, notamment entre des points du composant qui sont décalés parallèlement à l'axe optique du système.

Un troisième but de l'invention consiste à augmenter la durée effective d'utilisation d'un système d'observation qui est embarqué à bord d'un satellite, pendant laquelle des images peuvent être saisies («captured» en anglais) avec un niveau de qualité optique fixé.

Enfin, un quatrième but de l'invention consiste à réduire la quantité de lumière parasite qui est susceptible d'entrer dans le système d'observation et de réduire le contraste des images saisies.

Pour cela, la présente invention propose un système d'observation selon la revendication 1.

Grâce à cet élément de chauffage, l'ensemble de garde peut être chauffé de façon qu'il produise lui-même, notamment par sa face interne, un rayonnement thermique qui atteint la face antérieure du composant optique d'entrée. La quantité de ce rayonnement thermique peut alors être contrôlée, en commandant de façon appropriée l'unité de contrôle et d'alimentation électrique de l'élément de chauffage. Ainsi, le flux de rayonnement thermique qui est reçu par la face antérieure du composant optique d'entrée peut être ajusté par rapport à la température de la face postérieure de ce composant, et/ou au flux thermique qui est reçu à travers cette face postérieure. De cette façon, les variations de température qui sont susceptibles d'être produites au sein du composant optique d'entrée de l'ensemble de formation d'image, par des variations de l'environnement externe, notamment des variations entre des points du composant optique d'entrée qui sont décalés parallèlement à l'axe optique de l'ensemble de formation d'image, peuvent être réduites. Les déformations et les variations de déformation du composant optique d'entrée sont alors aussi réduites en conséquence.

Pour augmenter l'efficacité de l'ensemble de garde, la structure tubulaire peut avoir, sur sa face interne, une valeur d'un coefficient d'émissivité Infra Rouge ε qui est élevée. Cette valeur élevée a pour effet d'augmenter le couplage thermique entre la structure tubulaire et le composant optique d'entrée. Lorsque la structure tubulaire possède en outre une valeur faible d'un coefficient d'absorptivité solaire (absorption radiative) αₛ, la perturbation de l'ensemble garde que peut causer l'environnement externe est minimisée. Un tel revêtement de la paroi interne de la structure tubulaire, à valeur élevée du coefficient d'émissivité Infra Rouge ε et à valeur faible du coefficient d' absorptivité solaire αₛ, peut conduire à une forte réflexion dans l'intervalle de lumière visible, et donc à des problèmes de lumière parasite. Pour cette raison, une valeur élevée du coefficient d'émissivité Infra Rouge peut être privilégiée par rapport à une valeur faible du coefficient d'absorptivité solaire dans le choix du revêtement de la structure tubulaire.

Même lorsqu'une source de rayonnement thermique est située dans le champ d'observation du système, la perturbation thermique qu'elle génère au sein du composant optique d'entrée est réduite, grâce à la contribution de l'ensemble de la garde à la quantité totale de rayonnement thermique qui atteint la face antérieure du composant optique d'entrée.

De la même façon, le composant optique d'entrée de l'ensemble de formation d'image est aussi moins sensible à des variations de la quantité du rayonnement thermique qui provient du champ d'observation ou de la portion d'espace vers laquelle est tourné le composant optique d'entrée. La durée effective d'utilisation d'un système d'observation qui est conforme au premier aspect de l'invention, et qui est embarqué à bord d'un satellite, est ainsi augmentée.

En outre, l'ensemble de garde est conçu pour réduire une quantité de lumière parasite qui pourrait entrer dans le télescope. Pour cela, il est muni de déflecteurs sur la face interne de la structure tubulaire. En particulier, la structure tubulaire comprend des premières portions de surface qui sont disposées sur sa face interne, et qui sont tournées à la fois en direction de l'axe longitudinal central de la structure tubulaire et en direction de l'extrémité de celle-ci qui est opposée au composant optique d'entrée de l'ensemble de formation d'image. Une telle inclinaison des premières portions de surface réduit un angle d'incidence sur celles-ci d'un rayonnement qui entre dans la structure tubulaire par l'extrémité qui est opposée au composant optique d'entrée. Le rayonnement qui est ainsi réfléchi plus efficacement vers l'extérieur peut comprendre de la lumière parasite qui réduirait le contraste des images d'observation, et du rayonnement thermique provenant du champ d'observation.

Selon l'invention, l'ensemble de garde comprend une structure globalement tubulaire destinée à entourer le rayonnement incident qui pénètre dans l'ensemble de formation d'image, cette structure tubulaire comprenant elle-même sur sa face interne :
- des premières portions de surface, qui sont tournées à la fois en direction de l'axe longitudinal central de cette structure tubulaire et en direction de l'extrémité de celle-ci opposée au composant optique d'entrée de l'ensemble de formation d'image, ces premières portions de surface ayant une première valeur d'un coefficient d'émissivité Infra Rouge; et
- des secondes portions de surface, qui sont disposées entre les premières portions de surface, et qui ont une seconde valeur du coefficient d'émissivité Infra Rouge supérieure à la première valeur du coefficient d'émissivité Infra Rouge pour les premières portions de surface.

Ainsi, l'invention associe l'utilisation de déflecteurs sur la face interne de la structure tubulaire, avec un découplage thermique du composant optique d'entrée par rapport au demi-espace qui est situé devant l'ensemble de formation d'image. Il combine donc une réduction de la lumière parasite qui entre dans l'ensemble de formation d'image, avec une réduction des échanges thermiques entre le composant optique d'entrée et l'extérieur de l'ensemble de formation d'image. Grâce à cette réduction des échanges thermiques, les écarts et variations de température qui sont susceptibles d'apparaître au sein du composant optique d'entrée sont aussi réduits, de même que les déformations et les variations de déformation de ce composant qui résultent de ces écarts et variations.

La valeur faible du coefficient d'émissivité Infra Rouge des premières portions de surface, combinée avec l'orientation de celles-ci, assure qu'une partie importante du rayonnement thermique extérieur qui entre dans la structure tubulaire est réfléchie vers l'extérieur. Simultanément, elle assure que les pertes thermiques de la structure tubulaire vers l'espace sont réduites.

A l'inverse, la valeur plus élevée du coefficient d'émissivité Infra Rouge pour les secondes portions de surface assurent un couplage thermique radiatif de ces secondes portions avec la face antérieure du composant optique d'entrée. De cette façon, les secondes portions de surface contribuent, par leur propre capacité calorifique au moins, à réduire les variations de la température de la face antérieure du composant optique d'entrée. D'éventuels écarts variables de température, présents au sein de ce composant entre des points différents de celui-ci, sont alors aussi réduits en conséquence.

La réduction des écarts de température au sein du composant optique d'entrée permet d'augmenter la durée d'utilisation effective du système d'observation lorsqu'il est embarqué à bord d'un satellite d'observation planétaire ou d'observation de la Terre.

Les premières portions de surface réduisent la quantité de lumière parasite qui pénètre dans l'ensemble de formation d'image, de la façon qui a déjà été expliquée.

L'élément de chauffage permet de contrôler, en particulier, la température des secondes portions de surface. Celles-ci ayant une émissivité Infra Rouge qui est élevée, une proportion importante de la puissance thermique qui est apportée par l'élément de chauffage de l'ensemble de garde est transmise au composant optique d'entrée sous forme de rayonnement thermique. De cette façon les variations de température du composant ainsi que les écarts de température et les variations d'écarts de température entre les deux faces antérieure et postérieure du composant optique d'entrée peuvent être réduits encore plus efficacement, en contrôlant la puissance de l'élément de chauffage de la structure tubulaire.

En particulier, la mise en oeuvre des deux types de portions de surface, différenciées par leurs valeurs respectives du coefficient d'émissivité Infra Rouge, sur la face interne de la structure tubulaire permet de réduire la puissance de chauffage de la structure tubulaire qui est nécessaire pour réduire jusqu'à un niveau fixé les variations de température ainsi que les écarts et variation d'écart de température présents au sein du composant optique d'entrée.

Avantageusement, les secondes portions de surface peuvent être tournées en direction d'une partie centrale du composant optique d'entrée de l'ensemble de formation d'image, par rapport à une orientation parallèle à l'axe longitudinal central de la structure tubulaire. De cette façon, le couplage thermique par rayonnement est encore augmenté, entre les secondes portions de surface et le composant optique d'entrée.

Les premières portions de surface sur la face interne de la structure tubulaire sont avantageusement réfléchissantes pour une partie au moins de la lumière qui est utilisée pour former une image avec le système d'observation. La quantité de lumière parasite qui entre dans le télescope est alors réduite de façon supplémentaire.

Selon une disposition avantageuse sur la face interne de la structure tubulaire, les premières et secondes portions de surface peuvent être des couronnes qui sont alternées selon une direction longitudinale de la structure. De cette façon, les secondes portions de surface peuvent compenser une réduction du diamètre interne de la structure tubulaire qui résulte d'une inclinaison des premières portions de surface. En outre, les couronnes qui ont une valeur d'émissivité Infra Rouge supérieure sont ainsi chacune intercalées entre deux couronnes successives qui ont une valeur d'émissivité Infra Rouge plus faible.

L'ensemble de garde peut comprendre plusieurs éléments de chauffage qui sont disposés pour chauffer la structure tubulaire. Une telle multiplicité des éléments chauffants peut permettre d'obtenir une répartition de température dans la structure tubulaire qui soit mieux contrôlée, et/ou contrôlée pour obtenir répartition ajustée dans un but précis.

Eventuellement, la structure tubulaire peut être conçue pour réduire des transferts de chaleur par conduction entre les premières et secondes portions de surface. En outre, les éléments de chauffage peuvent être agencés pour chauffer principalement les secondes portions de surface, par rapport aux premières portions de surface. Une réduction de la puissance du chauffage de la structure tubulaire en résulte, pour obtenir une même réduction des variations de température ainsi que des écarts et variation d'écart de température présents au sein du composant optique d'entrée.

De préférence, l'unité de contrôle et d'alimentation en énergie peut être adaptée pour contrôler un chauffage de la partie de structure tubulaire de façon à maintenir une température de celle-ci sensiblement égale à une température du composant optique d'entrée. Au sens de la présente invention, on entend par maintenir la température de la structure tubulaire sensiblement égale à celle du composant optique d'entrée, un contrôle de la puissance d'alimentation de l'élément de chauffage selon lequel cette puissance est asservie pour minimiser une différence entre les températures respectives du composant optique d'entrée et de la structure tubulaire.

L'ensemble de formation d'image peut être de plusieurs types, en fonction de l'application du système d'observation.

En particulier, l'ensemble de formation d'image peut comprendre un télescope d'observation. Dans ce cas, le composant optique d'entrée peut être formé par un miroir primaire du télescope. L'invention permet alors de réduire des variations de température, des gradients de température et des variations de gradient de température qui présents dans le miroir primaire, entre des points de ce miroir qui sont décalés parallèlement à l'axe optique du télescope.

Alternativement, l'ensemble de formation d'image peut comprendre au moins un composant dioptrique, avec une lentille qui forme le composant optique d'entrée. Dans ce second cas, l'invention permet de réduire des variations de température, des gradients de température et des variations de gradient de température qui présents dans la lentille, entre des points de cette lentille qui sont décalés parallèlement à l'axe optique de celle-ci.

Dans d'autres applications encore, le composant optique d'entrée peut être une lame transparente, par exemple une lame en silice. Une telle lame transparente peut être adaptée pour protéger le système d'observation contre des rayonnements de haute énergie. La lame transparente peut alors être disposée à l'entrée optique de l'ensemble de formation d'image, de sorte qu'elle forme elle-même le composant optique d'entrée.

D'autres particularités et avantages de la présente invention apparaîtront dans la description ci-après d'exemples de réalisation non limitatifs, en référence aux dessins annexés, dans lesquels :
- les figures 1 à 3 illustrent respectivement des modes de réalisation ; et
- les figures 4a et 4b illustrent deux variantes des modes de réalisation des figures 2 et 3.

Pour raison de clarté des figures, les dimensions des éléments qui sont représentés ne correspondent ni à des dimensions réelles, ni à des rapports de dimensions réels. En outre, des références identiques sur des figures distinctes correspondent à des éléments qui sont identiques, ou qui ont des fonctions identiques.

A titre d'illustration, l'invention est maintenant décrite en détail lorsque l'ensemble de formation d'image est un télescope, avec un miroir primaire qui forme le composant optique d'entrée.

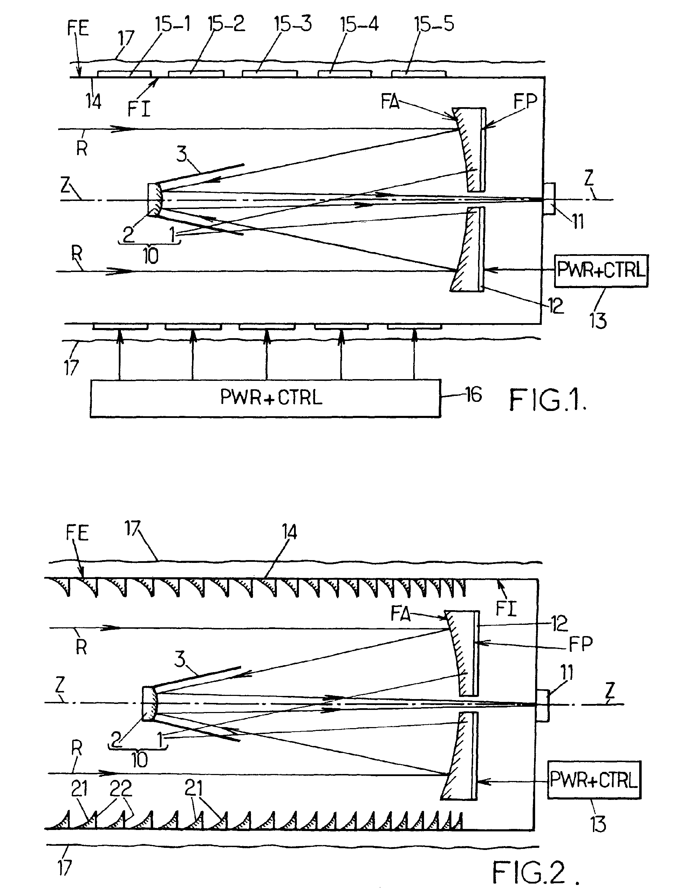

Sur les figures 1 à 3, la référence 10 désigne un télescope, par exemple un télescope d'observation en lumière visible. Le télescope 10 comprend plusieurs miroirs, dont un miroir primaire 1. En fonction du type de télescope 10, celui-ci comprend en outre un miroir secondaire 2 et éventuellement un ou plusieurs miroirs supplémentaires, non représentés. FA et FP désignent respectivement la face antérieure du miroir 1, réfléchissante pour la lumière qui est utilisée pour l'observation, et sa face postérieure. La face antérieure FA est tournée vers l'entrée optique du télescope 10 et Z-Z désigne l'axe optique du télescope, qui est confondu avec l'axe optique du miroir primaire 1.

Le miroir primaire 1 peut être circulaire et avoir un diamètre compris entre quelques dizaines de centimètres et plusieurs mètres.

La face antérieure FA du miroir 1 est alors exposée au rayonnement qui provient du demi-espace situé en avant de cette face. Ce rayonnement comprend notamment :
- de la lumière visible qui est émise par une zone observée située dans le champ d'entrée du télescope 10, et à partir de laquelle une image de cette zone est formée ;
- de la lumière parasite qui atteint le miroir 1 sans provenir directement de la zone observée ; et
- du rayonnement infrarouge, d'origine thermique, qui atteint aussi le miroir 1.

La référence 11 désigne le détecteur lumineux, adapté pour saisir les images qui sont formées par le télescope 10. Le détecteur 11 possède une face sensible qui est située dans le plan de formation d'image du télescope 10. R désigne deux rayons lumineux qui participent à l'image formée. D'autres miroirs, de puissance optique ou de repliement de faisceaux, peuvent être intercalés entre ce détecteur 11 et le miroir primaire 1.

Un système de chauffage du miroir primaire 1 peut être disposé pour chauffer ce dernier par sa face postérieure FP. Ce système peut comprendre au moins un élément chauffant 12, qui est en liaison thermique avec la face postérieure FP du miroir 1, et une unité 13 d'alimentation électrique («PWR») et de contrôle («CTRL») de l'élément chauffant 12.

Le télescope 10 est associé à un tube 14 qui entoure la lumière à partir de laquelle l'image saisie est formée, avant que cette lumière n'atteigne la face FA du miroir primaire 1. Le tube 14 est globalement rectiligne et possède deux sections d'extrémités qui sont ouvertes. Le télescope 10 est situé à l'une de ces extrémités, avec le détecteur 11, et l'autre extrémité est ouverte en direction de la zone observée. Le tube 14 forme un écran pour des rayons lumineux qui se propagent en direction du miroir 1, obliquement par rapport à l'axe optique Z-Z, et qui ne proviennent pas de la zone observée. De cette façon, le tube 14 réduit la quantité de lumière parasite qui pénètre dans le télescope 10. L'Homme du métier sait comment sélectionner les dimensions du tube 14, notamment son diamètre et sa longueur, en fonction des caractéristiques optiques et géométriques du télescope 10.

Le tube 14 est recouvert sur sa face externe, notée FE, par une structure 17 isolante thermiquement. Cette structure peut être d'un type connu à plusieurs feuilles réfléchissantes empilées, couramment désigné par MLI pour «MultiLayer Insulation» en anglais.

Le tube 14 peut être fixé au télescope 10 d'une façon qui est connue de l'Homme du métier, et qui n'est pas reprise ici.

Une structure conique 3 peut aussi être disposée de façon à entourer le rayonnement incident qui arrive sur la face réfléchissante du miroir secondaire 2. La structure 3 est ouverte à ses deux extrémités et peut être symétrique par rotation autour de l'axe optique Z-Z. Elle peut établir une liaison avec le bord périphérique du miroir 2, et s'étend en direction du miroir 1 avec une section interne qui s'ouvre de plus en plus. La structure 3 contribue à réduire la quantité de lumière parasite qui atteint la face réfléchissante du miroir 2 et qui pourrait, à partir de celle-ci, arriver jusqu'au détecteur 11. Pour cela, les surfaces internes et externes de la structure 3 sont avantageusement absorbantes pour la lumière parasite. Par exemple, elles peuvent être recouvertes d'un revêtement noir.

Dans le premier mode de réalisation qui est illustré par la figure 1, l'ensemble de garde comprend, en plus du tube 14, plusieurs éléments chauffants, par exemple cinq éléments chauffants référencés 15-1 à 15-5. Ces éléments chauffants peuvent être, par exemple, des résistances électriques de chauffage. Ils sont connectés à une unité d'alimentation et de contrôle 16, qui produit la puissance nécessaire pour chauffer le tube 14 en fonction d'instructions de consigne introduites par ailleurs. Les éléments chauffants 15-1 à 15-5 sont disposés pour chauffer le tube 14, afin que la face interne de celui-ci, notée FI, produise un rayonnement thermique dont une partie atteint la face antérieure FA du miroir primaire 1. Par exemple, les éléments chauffants 15-1 à 15-5 sont en contact thermique avec la face externe FE du tube 14, entre le tube lui-même et la structure isolante 17.

Lorsque les éléments chauffants 15-1 à 15-5 sont alimentés en puissance par l'unité 16, une partie du rayonnement thermique qui est produit par la face interne FI du tube 14 atteint la face antérieure FA du miroir primaire 1, et est absorbée par celle-ci. Elle contribue donc à augmenter la température du miroir 1 au niveau de sa face antérieure FA. Un écart de température ou une variation d'écart de température qui peut être présent entre cette face FA et la face postérieure FP du miroir 1 est alors diminué, la face FP pouvant être elle-même chauffée séparément par l'élément chauffant 12. Ainsi, des gradients thermiques parallèles à l'axe Z-Z qui peuvent être présents au sein du miroir primaire 1 sont réduits, de même que leurs variations. Des déformations du miroir primaire 1 qui sont causées par de tels gradients, et les variations de ces déformations, sont donc aussi réduites en conséquence. La face antérieure FA du miroir 1 varie donc très peu par rapport à sa forme nominale, si bien que la qualité optique de l'image qui est saisie par le détecteur 11 reste élevée.

De préférence, les éléments de chauffage 15-1 à 15-5 sont alimentés pour chauffer la face interne FI du tube 14 à une température qui est proche de celle de la face postérieure FP du miroir primaire 1. De cette façon, la face antérieure FA du miroir 1 est en équilibre thermique par rapport à la face interne FI du tube 14.

Dans le second mode de réalisation qui est illustré par la figure 2, l'ensemble de garde comprend, en plus du tube 14, une série de premières portions de surface 21 chacune en forme de couronne. Une série de secondes portions de surface 22 peuvent être disposées entre les portions 21. Les portions 21 et 22 sont disposées sur la face interne FI du tube 14, entre les deux extrémités de celui-ci.

Les portions de surface 21 ont une faible émissivité thermique : elles présentent une valeur du coefficient d'émissivité Infra Rouge qui est faible. Le coefficient d'émissivité Infra Rouge, qui est couramment désigné par ε et compris entre 0 et 1, caractérise l'intensité du rayonnement infrarouge qui est produit par une surface lorsque celle-ci est chauffée. Cette intensité croît avec la valeur de ε. Pour une présentation plus complète du coefficient d'émissivité Infra Rouge, on pourra se reporter à l'un des nombreux ouvrages disponibles sur ce sujet. La valeur de ε pour les portions de surface 21 est inférieure à 0,5, de préférence inférieure à 0,1.

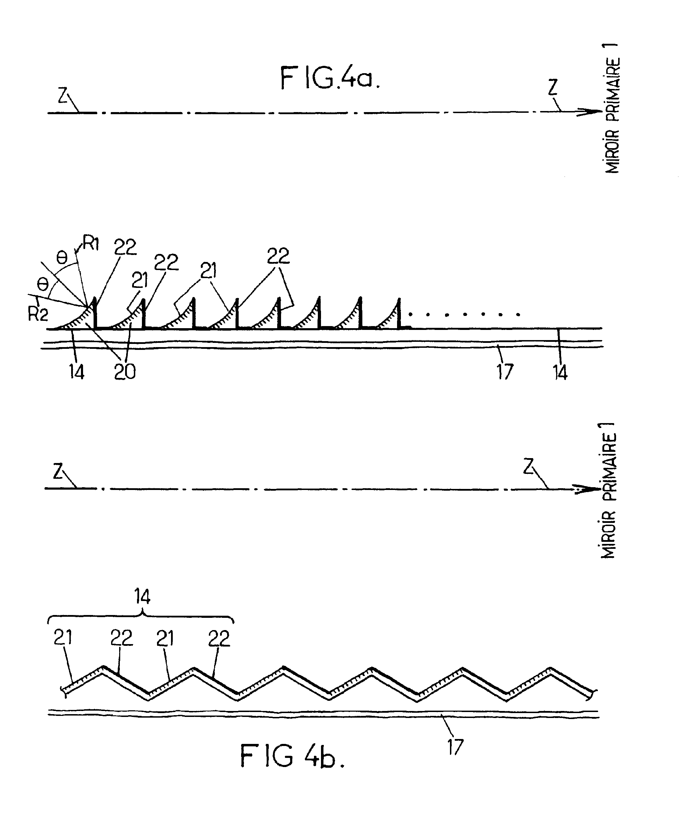

Les premières portions de surface 21 peuvent être des couronnes à symétrie de révolution dont l'axe est Z-Z. Dans un plan méridien, leur génératrice est inclinée en direction de l'extrémité du tube 14 ouverte vers le champ d'observation, à l'opposé du télescope 10. Une telle inclinaison réduit l'angle d'incidence, sur les portions 21, d'un rayonnement qui pénètre obliquement dans le tube 14 par son ouverture libre et qui atteint la paroi interne du tube. Sur la figure 4a, la réflexion d'un rayon incident R1 sur une première portion de surface 21 est représentée. θ désigne l'angle d'incidence du rayon R1 sur la portion 21. Le rayon réfléchi correspondant, noté R2, est renvoyé vers l'extrémité du tube 14 qui est opposée au miroir 1. De cette façon, le rayonnement qui ne participe pas à la formation de l'image d'observation qui est saisie par le détecteur 11, est réfléchi dans une proportion supérieure vers le demi-espace libre qui est situé devant le télescope, sans qu'il atteigne le miroir primaire 1. Les portions de surface 21 réduisent ainsi à la fois la quantité de rayonnement thermique externe au système d'observation qui est susceptible de produire des écarts de température au sein du miroir 1, et la quantité de lumière parasite qui est susceptible de réduire le contraste de l'image saisie par le détecteur 11. La forme de la génératrice de chaque portion de surface 21 dans un plan méridien peut être rectiligne, une portion de cercle, une portion d'ellipse, ou toute autre forme compatible avec l'inclinaison de chaque portion 21 qui vient d'être indiquée.

Les premières portions de surface 21 sont donc avantageusement réfléchissantes pour le rayonnement thermique, et pour de la lumière qui possède une longueur d'onde identique à celle des rayons formant l'image de la zone observée.

D'une façon similaire à celle qui vient d'être expliquée pour le rayonnement, les premières portions de surface 21 contribuent aussi à réduire un flux de particules de matière qui est susceptible de dégrader la face antérieure FA du miroir primaire 1. En effet, certaines particules présentes dans l'espace à l'entrée du télescope, lorsqu'elles ont une vitesse orientée obliquement par rapport à l'axe optique Z-Z, rebondissent élastiquement ou quasi-élastiquement sur les portions 21 et sont ainsi renvoyées vers l'ouverture du tube 14 qui est opposée au miroir primaire 1. Une telle réduction de l'exposition du miroir 1 est particulièrement avantageuse par rapport à des atomes d'oxygène libres qui sont présents à l'extérieur du télescope 10 et sont très réactifs par rapport au matériau du miroir 1. En effet, lorsque le système d'observation est utilisé à bord d'un satellite terrestre qui a une orbite basse, le flux d'oxygène qui est traversé par le satellite est important, avec une vitesse relative très rapide.

Chaque seconde portion de surface 22 est située entre deux premières portions de surface 21 successives. Par exemple, elle peut raccorder deux portions 21 successives. Les figures 4a et 4b sont des coupes du tube 14 dans un plan méridien, qui illustrent deux configurations particulières des portions 21 et 22.

Dans la configuration de la figure 4a, des ailettes («blades») 20 sont rapportées sur la face interne FI du tube 14. Chacune d'elles peut avoir, par exemple, une forme elliptique dans un plan méridien. Les premières portions de surface 21 sont les faces de ces ailettes qui sont orientées vers l'axe Z-Z. Les secondes portions de surface 22 sont alors constituées par les faces postérieures des ailettes 20, opposées aux portions 21. Eventuellement, les portions 22 peuvent comprendre aussi des portions de la face interne FI du tube 14 qui sont situées entre deux ailettes 20 successives.

Dans la configuration de la figure 4b, chaque portion de surface 21 ou 22 correspond à une couronne respective, à symétrie de révolution autour de l'axe Z-Z. Elles peuvent toutes avoir des formes de tranches de cônes, mais leurs génératrices respectives dans un plan méridien sont inclinées différemment : vers l'extrémité du tube 14 à laquelle est située le miroir 1 pour les couronnes de portions 22, ou vers l'autre extrémité du tube 14 pour les couronnes de portions 21. Les portions de surface 21 et 22 peuvent alors former elles-mêmes le tube 14, avec un profil de lampion ou en accordéon.

Les secondes portions de surface 22 ont une valeur du coefficient d'émissivité Infra Rouge supérieure à celle des premières portions de surface 21. De préférence, la valeur pour les portions 22 est supérieure à 0,5, et de façon préférée supérieure à 0,8. Ainsi, les portions de surface 22 produisent un rayonnement thermique, partiellement en direction du miroir primaire 1, qui contribue à augmenter la température de la face antérieure FA de celui-ci. Ainsi, l'écart de température et les variations de cet écart entre les faces FA et FP du miroir 1 sont réduits par les portions 22.

Pour cela, les secondes portions de surface 22 peuvent être recouvertes d'un revêtement foncé, de préférence de couleur noire. Par exemple, un tel revêtement peut être appliqué sous la forme d'un dépôt ou d'un traitement chimique.

Dans tous les cas, les portions de surface 21 qui ont une émissivité Infra Rouge faible sont plutôt tournées vers l'extrémité de la structure tubulaire qui est ouverte vers le champ d'observation, et les portions de surface 22 qui ont une émissivité Infra Rouge élevée sont plutôt tournées vers le miroir primaire 1.

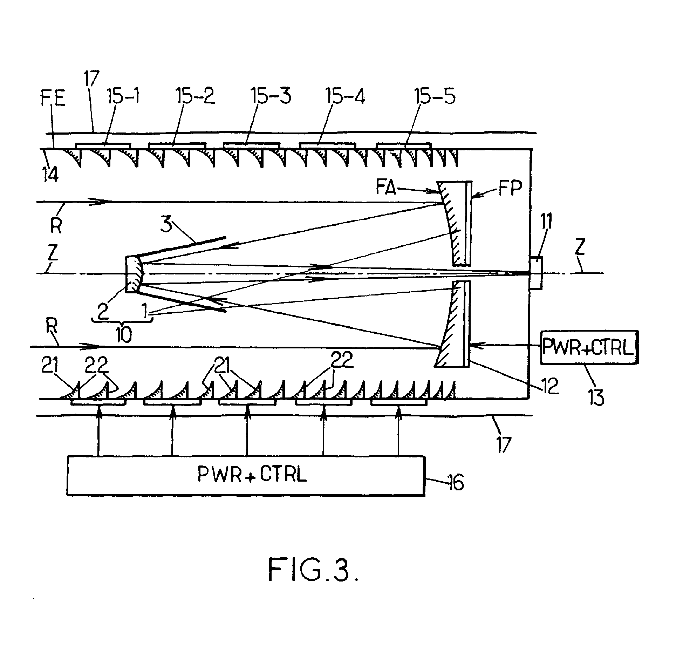

La figure 3 illustre un mode de réalisation de l'invention qui regroupe les composants des deux modes de réalisation des figures 1 et 2. Ainsi, le tube 14 est muni à la fois des éléments chauffants 15-1 à 15-5 et des portions de surface 21 et 22 à valeurs distinctes du coefficient d'émissivité Infra Rouge.

Chacun de ces composants peut être conforme à la description qui en a été donnée plus haut.

De préférence, les éléments chauffants 15-1 à 15-5 sont alimentés pour chauffer au moins les secondes portions de surface 22 à une température qui est proche de celle de la face postérieure FP du miroir primaire 1. Dans ces conditions, l'ensemble de garde réduit le couplage thermique du miroir 1 avec le demi-espace qui contient le champ d'observation. Les premières portions de surface 21 réfléchissent le rayonnement oblique qui provient de ce demi-espace. Simultanément, les secondes portions de surface 22 chauffées contribuent à établir un équilibre thermique radiatif entre elles-mêmes et le miroir 1.

Par rapport au premier mode de réalisation de la figure 1, l'ajout des portions de surface 21 réfléchissantes et des portions de surface 22 émissives permet de réduire considérablement la puissance d'alimentation des éléments chauffants 15-1 à 15-5, qui est nécessaire pour obtenir une même diminution des écarts de température présents dans le miroir 1. Dans le cas d'un miroir 1 ayant un diamètre d'environ un mètre, les inventeurs ont constaté que les portions de surface 21 et 22 permettent de réduire d'un facteur trois environ cette puissance électrique.

Il est entendu que l'invention peut être reproduite en modifiant des aspects secondaires de la mode de réalisation de l'invention qui vient d'être décrit, tout en conservant certains au moins des avantages qui ont été cités. Par exemple, les éléments de chauffage qui sont utilisés pour chauffer la structure tubulaire de l'ensemble de garde peuvent aussi être des échangeurs de chaleur, qui sont alimentés par un fluide chauffé par ailleurs.

Enfin, il est rappelé que l'invention peut être mise en oeuvre quelque soit le type et la constitution de l'ensemble de formation d'image, que celui-ci soit un télescope avec un miroir primaire, un système dioptrique avec une lentille qui forme le composant optique d'entrée, ou que l'ensemble de formation d'image soit équipé d'une lame transparente qui forme elle-même le composant optique d'entrée.

## Revendications

1. Système d'observation comprenant :
- un ensemble de formation d'image (10), notamment d'image en lumière visible, incorporant lui-même un composant optique d'entrée (1) et ayant une entrée optique s'étendant devant ledit composant optique d'entrée ;
- un ensemble de garde disposé autour de l'entrée optique de l'ensemble de formation d'image ; et
- une unité (16) de contrôle et d'alimentation en énergie,
dans lequel l'ensemble de garde comprend lui-même :
- une structure globalement tubulaire (14), ouverte à deux extrémités opposées de ladite structure et entourant un rayonnement incident arrivant sur le composant optique d'entrée ; et
- au moins un élément de chauffage (15-1,..., 15-5) disposé pour chauffer ladite structure tubulaire, avec l'unité de contrôle et d'alimentation en énergie (16) connectée à l'élément de chauffage, et adaptée pour contrôler un chauffage d'une partie au moins de la structure tubulaire (14) ;
le système d'observation étant **caractérisé en ce que** la structure tubulaire (14) comprend en outre des premières portions de surface (21) disposées sur une face interne (FI) de ladite structure tubulaire, et tournées à la fois en direction d'un axe longitudinal central de ladite structure tubulaire et en direction de l'extrémité de ladite structure tubulaire opposée au composant optique d'entrée (1) de l'ensemble de formation d'image (10) ; et
la structure tubulaire (14) comprend en outre des secondes portions de surface (22) disposées sur la face interne (FI) de la structure tubulaire, entre les premières portions de surface (21), lesdites secondes portions de surface ayant une seconde valeur de coefficient d'émissivité Infra Rouge supérieure à une première valeur du coefficient d'émissivité Infra Rouge pour lesdites premières portions de surface.

2. Système d'observation selon la revendication 1, dans lequel les premières portions de surface (21) sont réfléchissantes pour une partie au moins d'une lumière utilisée pour former l'image avec le système d'observation (10).

3. Système d'observation selon la revendication 1 ou 2, dans lequel les premières portions de surface (21) ont une première valeur d'un coefficient d'émissivité Infra Rouge inférieure à 0,5, de préférence inférieure à 0,1.

4. Système d'observation selon l'une quelconque des revendications précédentes, dans lequel la seconde valeur du coefficient d'émissivité Infra Rouge, pour les secondes portions de surface (22), est supérieure à 0,5, de préférence supérieure à 0,8.

5. Système d'observation selon l'une quelconque des revendications précédentes, dans lequel les secondes portions de surface (22) sont tournées en direction d'une partie centrale du composant optique d'entrée (1) de l'ensemble de formation d'image (10), par rapport à une orientation parallèle à l'axe longitudinal central de la structure tubulaire.

6. Système d'observation selon l'une quelconque des revendications précédentes, dans lequel les premières (21) et secondes (22) portions de surface sont des couronnes alternées selon une direction longitudinale de la structure tubulaire (14).

7. Système d'observation selon l'une quelconque des revendications précédentes, comprenant plusieurs éléments de chauffage (15-1,..., 15-5) disposés pour chauffer la structure tubulaire (14).

8. Système d'observation selon l'une quelconque des revendications précédentes, dans lequel l'unité (16) de contrôle et d'alimentation en énergie est adaptée pour contrôler un chauffage de la partie de la structure tubulaire (14) de façon à maintenir une température de ladite partie de structure tubulaire sensiblement égale à une température du composant optique d'entrée (1).

9. Système d'observation selon l'une quelconque des revendications précédentes, comprenant en outre :
- un détecteur de lumière (11), agencé pour détecter une image formée par l'ensemble de formation d'image.

10. Système d'observation selon l'une quelconque des revendications 1 à 9, dans lequel l'ensemble de formation d'image (10) comprend un télescope d'observation, avec un miroir primaire dudit télescope formant le composant optique d'entrée (1) dudit ensemble de formation d'image.

11. Système d'observation selon l'une quelconque des revendications 1 à 9, dans lequel l'ensemble de formation d'image (10) comprend au moins un composant dioptrique, avec une lentille formant le composant optique d'entrée (1) dudit ensemble de formation d'image.

12. Système d'observation selon l'une quelconque des revendications 1 à 9, dans lequel l'ensemble de formation d'image (10) comprend une lame transparente, ladite lame transparente formant le composant optique d'entrée (1) dudit ensemble de formation d'image.

## Patentansprüche

1. Beobachtungssystem, umfassend:
- eine Bilderzeugungsanordnung (10), insbesondere zur Erzeugung eines Bildes aus sichtbarem Licht, die ihrerseits eine optische Eingangskomponente (1) enthält und einen optischen Eingang aufweist, der sich vor der optischen Eingangskomponente erstreckt;
- eine Schutzanordnung, die um den optischen Eingang der Bilderzeugungsanordnung angeordnet ist; und
- eine Steuerungs- und Energieversorgungseinheit (16),
wobei die Schutzanordnung ihrerseits Folgendes umfasst:
- eine im Allgemeinen rohrförmige Struktur (14), die an zwei einander gegenüberliegenden Enden der Struktur geöffnet ist und eine an der optischen Eingangskomponente eintreffende Einfallsstrahlung umgibt; und
- zumindest ein Heizelement (15-1,..., 15-5) zum Erhitzen der rohrförmigen Struktur, wobei die Steuerungs- und Energieversorgungseinheit (16) mit dem Heizelement verbunden ist, und eingerichtet ist, eine Heizung zumindest eines Teils der rohrförmigen Struktur zu steuern;
wobei das Beobachtungssystem **dadurch gekennzeichnet ist, dass** die rohrförmige Struktur (14) ferner erste Oberflächenabschnitte (21) umfasst, die auf einer Innenseite (FI) der rohrförmigen Struktur angeordnet sind und gleichzeitig in Richtung einer zentralen Längsachse der rohrförmigen Struktur und in Richtung des Endes der rohrförmigen Struktur, das der optischen Eingangskomponente (1) der Bilderzeugungsanordnung (10) gegenüberliegt, gewandt sind; und dass die rohrförmige Struktur (14) ferner zweite Oberflächenabschnitte (22) umfasst, die auf der Innenseite (FI) der rohrförmigen Struktur zwischen den ersten Oberflächenabschnitten (21) angeordnet sind, wobei die zweiten Oberflächenabschnitte einen zweiten Infrarot-Emissionsfaktorwert aufweisen, der größer als ein erster Infrarot-Emissionsfaktorwert der ersten Oberflächenabschnitte ist.

2. Beobachtungssystem nach Anspruch 1, wobei die ersten Oberflächenabschnitte (21) zumindest für einen Teil eines Lichtes, das zur Erzeugung des Bildes mit dem Beobachtungssystem (10) genutzt wird, reflektierend sind.

3. Beobachtungssystem nach Anspruch 1 oder 2, wobei die ersten Oberflächenabschnitte (21) einen ersten Infrarot-Emissionsfaktorwert aufweisen, der kleiner als 0,5 und vorzugsweise kleiner als 0,1 ist.

4. Beobachtungssystem nach einem der vorangehenden Ansprüche, wobei der zweite Infrarot-Emissionsfaktorwert der zweiten Oberflächenabschnitte (22) größer als 0,5 und vorzugsweise größer als 0,8 ist.

5. Beobachtungssystem nach einem der vorangehenden Ansprüche, wobei die zweiten Oberflächenabschnitte (22) in Richtung eines zentralen Bereichs der optischen Eingangskomponente (1) der Bilderzeugungsanordnung (10) in Bezug auf eine zur zentralen Längsachse der rohrförmigen Struktur parallele Ausrichtung gewandt sind.

6. Beobachtungssystem nach einem der vorangehenden Ansprüche, wobei die ersten (21) und zweiten (22) Oberflächenabschnitte Kränze sind, die entlang einer Längsrichtung der rohrförmigen Struktur (14) alternieren.

7. Beobachtungssystem nach einem der vorangehenden Ansprüche, umfassend mehrere Heizelemente (15-1,..., 15-5) zum Erhitzen der rohrförmigen Struktur (14).

8. Beobachtungssystem nach einem der vorangehenden Ansprüche, wobei die Steuerungsund Energieversorgungseinheit (16) eingerichtet ist, eine Heizung des Bereichs der rohrförmigen Struktur (14) so zu steuern, dass eine Temperatur des Bereichs der rohrförmigen Struktur im Wesentlichen gleich einer Temperatur der optischen Eingangskomponente (1) gehalten wird.

9. Beobachtungssystem nach einem der vorangehenden Ansprüche, ferner umfassend:
- einen Lichtdetektor (11) zum Erkennen eines von der Bilderzeugungsanordnung erzeugten Bildes.

10. Beobachtungssystem nach einem der Ansprüche 1 bis 9, wobei die Bilderzeugungsanordnung (10) ein Beobachtungsteleskop umfasst, wobei ein Primärspiegel des Teleskops die optische Eingangskomponente (1) der Bilderzeugungsanordnung ausbildet.

11. Beobachtungssystem nach einem der Ansprüche 1 bis 9, wobei die Bilderzeugungsanordnung (10) zumindest eine dioptrische Komponente mit einer Linse, welche die optische Eingangskomponente (1) der Bilderzeugungsanordnung ausbildet, aufweist.

12. Beobachtungssystem nach einem der Ansprüche 1 bis 9, wobei die Bilderzeugungsanordnung (10) eine transparente Platte umfasst, welche die optische Eingangskomponente (1) der Bilderzeugungsanordnung ausbildet.

## Claims

1. Observation system, comprising:
- an assembly (10) for forming an image, in particular an image in visible light, in turn incorporating an optical inlet component (1) and having an optical inlet extending in front of said optical inlet component;
- a shield assembly disposed around said optical inlet of the image forming assembly; and
- a power supply and control unit (16),
the shield assembly in turn comprising:
- a globally tubular structure (14) open at two opposite ends of said structure and surrounding incident radiation arriving at said optical inlet component; and
- at least one heating element (15-1, ..., 15-5) disposed so as to heat said tubular structure, the power supply and control unit (16) being connected to the heating element, and configured so as to control heating of at least a part of the tubular structure (14);
the observation system being **characterised in that** the tubular structure (14) further comprises first surface portions (21) disposed on an internal surface (F1) of said tubular structure and directed both in the direction of a central longitudinal axis of said tubular structure and in the direction of the end of said tubular structure opposite the optical inlet component (1) of the image forming assembly (10); and
the tubular structure (14) further comprises second surface portions (22) disposed on the internal face (F1) of the tubular structure between the first surface portions (21), said second surface portions having a second value of infrared emissivity coefficient higher than a first value of infrared emissivity coefficient of said first surface portions.

2. Observation system as claimed in claim 1, in which the first surface portions (21) are reflective for at least part of a light used to form the image with the observation system (10).

3. Observation system as claimed in claim 1 or 2, in which the first surface portions (21) have a first value for the infrared emissivity coefficient of less than 0.5, preferably less than 0.1.

4. Observation system as claimed in any one of the preceding claims, in which the second value of the infrared emissivity coefficient for the second surface portions (22) is higher than 0.5, preferably higher than 0.8.

5. Observation system as claimed in any one of the preceding claims, in which the second surface portions (22) are directed in the direction of a central part of the optical inlet component (1) of the image forming assembly (10) relative to an orientation parallel with the central longitudinal axis of the tubular structure.

6. Observation system as claimed in any one of the preceding claims, in which the first (21) and second (22) surface portions are crowns alternating in a longitudinal direction of the tubular structure (14).

7. Observation system as claimed in any one of the preceding claims, comprising several heating elements (15-1, ..., 15-5) disposed so as to heat the tubular structure (14).

8. Observation system as claimed in any one of the preceding claims, in which the power supply and control unit (16) is configured to control heating of the part of the tubular structure (14) so as to maintain said tubular structure part at a temperature substantially equal to a temperature of the optical inlet component (1).

9. Observation system as claimed in any one of the preceding claims, further comprising:
- a light detector (11) disposed so as to detect an image formed by the image forming assembly.

10. Observation system as claimed in any one of claims 1 to 9, in which the image forming assembly (10) comprises an observation telescope, with a primary mirror of said telescope constituting the optical inlet component (1) of said image forming assembly.

11. Observation system as claimed in any one claims 1 to 9, in which the image forming assembly (10) comprises at least one diopter component, with a lens constituting the optical inlet component (1) of said image forming assembly.

12. Observation system as claimed in any one of claims 1 to 9, in which the image forming assembly (10) comprises a transparent plate, said transparent plate constituting the optical inlet component (1) of said image forming assembly.
